# EUROPEAN PATENT APPLICATION

(11) **EP 2 657 587 A2**
(43) Date of publication of application: **30.10.2013**
(21) Application number: 13165021.0
(22) Date of filing: 23.04.2013
(51) Int. Cl.: F16M 11/10, A47B 23/04, F16M 11/38, F16M 13/00

(54) **Holder for portable electronic device**

(30) Priority: 27.04.2012 TW 101208014; 27.04.2012 TW 101208016
(71) Applicant: Chi Mei Communication Systems, Inc., New Taipei City 236 (TW)
(72) Inventor: Chueh, Lee, New Taipei (TW)
(74) Representative: Gray, John James

(57) **Abstract**

A holder (100) is for supporting a portable electronic device (200), including at least one sheet (20), a base portion (61), a first supporting portion (62) and a second supporting portion (63) formed on the at least one sheet (20). The base portion, the first supporting portion and the second supporting portion are parallel with each other and folded relative to each other. A latching piece (55) is formed on the base portion. The first supporting portion is folded relative to the base portion, and the second supporting portion is folded relative to the first supporting portion until the second supporting portion is held by the latching piece, the base portion, the first supporting portion and the second supporting portion cooperatively form a three-dimensional structure that can support the portable electronic device at an angle relative to the at least one sheet without collapsing.

## Description

### Field

This disclosure relates to holders for portable electronic devices, particularly, to a multifunction holder for protecting and supporting portable electronic devices.

### BackGround

Holders are widely used to protect portable electronic devices and support the portable electronic device for a user to, for example, read an eBook or watch video. However, it can be difficult to carry the holder and the electronic device at the same time. Therefore, there is room for improvement within the art.

### Summary

According to a first aspect of the disclosure, a holder is provided for holding and supporting a portable electronic device. The holder comprises at least one sheet. A base portion, a first supporting portion and a second supporting portion are formed on the at least one sheet. The base portion, the first supporting portion and the second supporting portion are parallel with each other and are folded relative to each other. A latching piece is formed on the base portion. The first supporting portion is folded relative to the base portion, and the second supporting portion is folded relative to the first supporting portion until the second supporting portion is held by the latching piece, the base portion, the first supporting portion and the second supporting portion cooperatively form a three-dimensional structure that can support the portable electronic device at an angle relative to the at least one sheet without collapsing.

According to a second aspect of the disclosure, a holder is provided for holding and supporting a portable electronic device. The holder comprises a first outer sheet and a second outer sheet connected to the first outer sheet. A receiving space and an entrance being defined between the first outer sheet and the second outer sheet for receiving the portable electronic device. The entrance communicates with the receiving space for allowing the portable electronic device to be inserted into the receiving space. A plurality of foldable portions are formed on the second outer sheet, the foldable portions parallel with each other when the holder is in a flat configuration and foldable relative to each other. A latching piece is formed on the second outer sheet, and the latching piece has a bendable portion. The foldable portions are folded relative to each other until one of the foldable portions is held by the latching piece, the foldable portions cooperatively form a three-dimensional structure that can support the portable electronic device at an angle relative to the second outer sheet without collapsing.

### BRIEF DESCRIPTION OF THE DRAWINGS

Many aspects of the holder can be better understood with reference to the following drawings. The components in the drawings are not necessarily drawn to scale, the emphasis instead being placed upon clearly illustrating the principles of the holder.

FIG. 1 is an isometric view of a holder, in accordance with a first exemplary embodiment.

FIG. 2 is similar to FIG. 1, but shown from another aspect.

FIG. 3 is an isometric view of the holder, showing the holder for receiving a portable electronic device.

FIG. 4 is similar to FIG. 2, showing the holder in a state of being partially folded.

FIG. 5 is similar to FIG. 4, showing the holder folded as a support.

FIG. 6 is similar to FIG. 5, showing the latching portion of the holder to be bent.

FIG. 7 shows the holder supporting the portable electronic device in a first state.

FIG. 8 shows the holder supporting the portable electronic device in a second state.

FIG. 9 is an isometric view of a holder, in accordance with a second exemplary embodiment.

FIG. 10 is similar to FIG. 9, but shown from another aspect.

FIG. 11 is an isometric view of the holder, showing the holder for receiving a portable electronic device.

FIG. 12 is similar to FIG. 10, showing the holder in a state of being partially folded.

FIG. 13 is similar to FIG. 12, showing the holder folded as a support.

FIG. 14 is similar to FIG. 13, showing the latching portion of the holder to be bent.

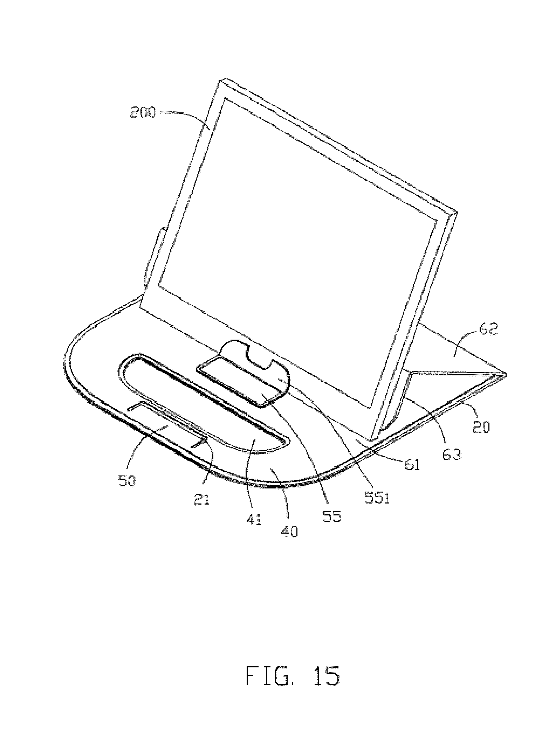

FIG. 15 shows the holder supporting the portable electronic device in a first state.

FIG. 16 shows the holder supporting the portable electronic device in a second state.

### DETAILED DESCRIPTION

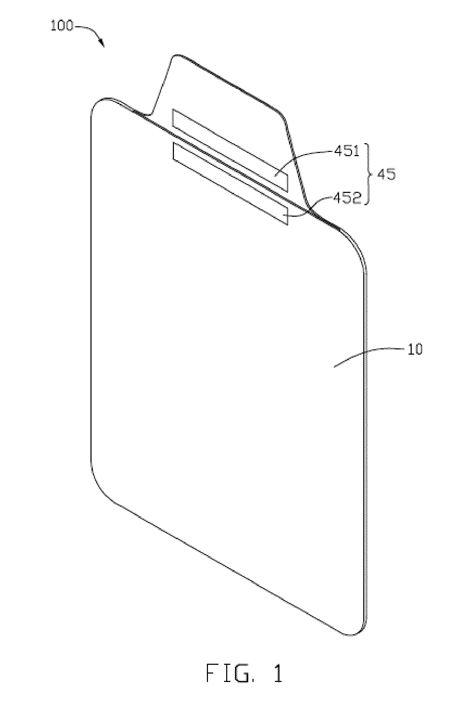

FIGS. 1-2, and 7 show a first exemplary embodiment of a holder 100. The holder 100 can receive and protect a portable electronic device 200, and can also support and hold the portable electronic device 200.

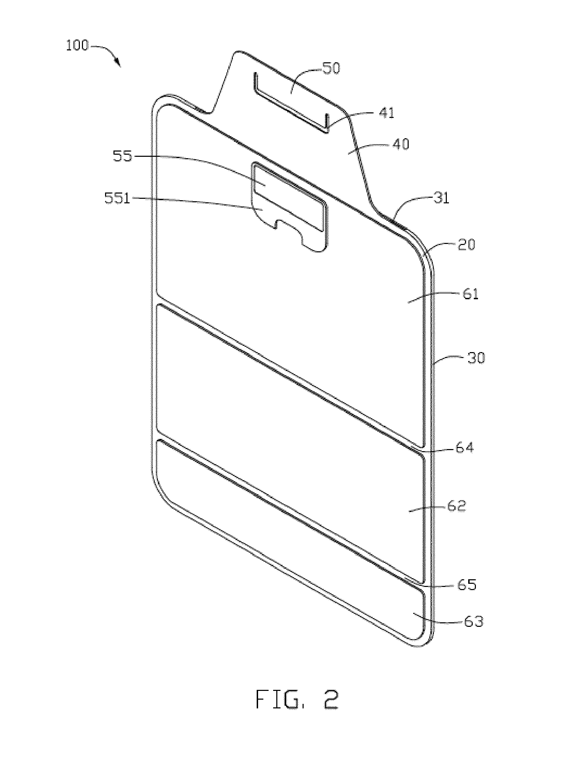

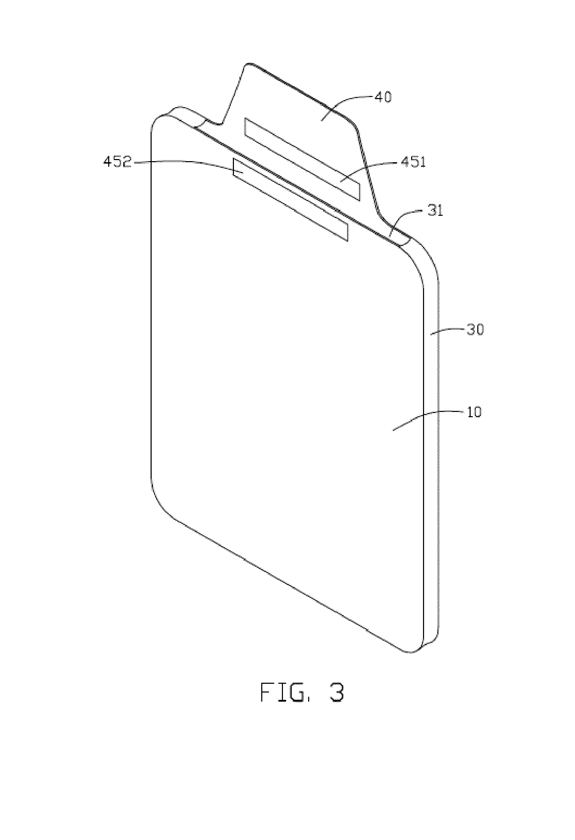

Also referring to FIGs. 2 and 3, the holder 100 includes a first outer sheet 10, a second outer sheet 20, an expandable portion 30, and a covering portion 40. A receiving space (not labeled) is defined between the second outer sheet 20 and the first outer sheet 10 and surrounded by the expandable portion 30 for receiving the portable electronic device 200. The first outer sheet 10 and the second outer sheet 20 are connected to each other along their edges by the expandable portion 30, leaving a entrance 31 that allows the portable electronic device 200 to be inserted into the receiving space. The holder 100 shown herein for illustrative purpose includes the first outer sheet 10 and the expandable portion 30; however, the expandable portion 30 may be omitted and the first and second outer sheets connected to each other along their perimeters. In another example, if the holder 100 is not used for receiving the portable electronic device 200 therein, only one of the first outer sheet 10 and the second outer sheet 20 may also be used. The first outer sheet 10, the expandable portion 30, and the second outer sheet 20 are made of soft material, e.g., fiber, cotton, vinyl, thermoplastics.

The covering portion 40 is flexible and is used to cover the entrance 31. The covering portion 40 may be an extension of the second outer sheet 20. The covering portion 40 shown herein is trapezoid-shaped, however, any other shapes may also be used.

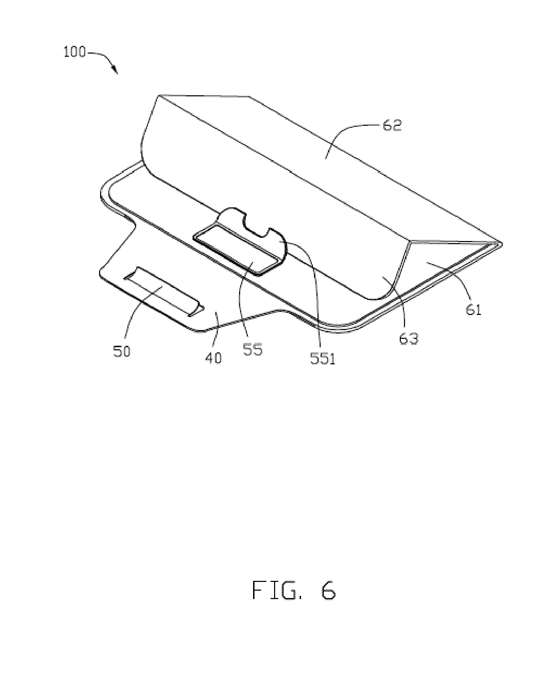

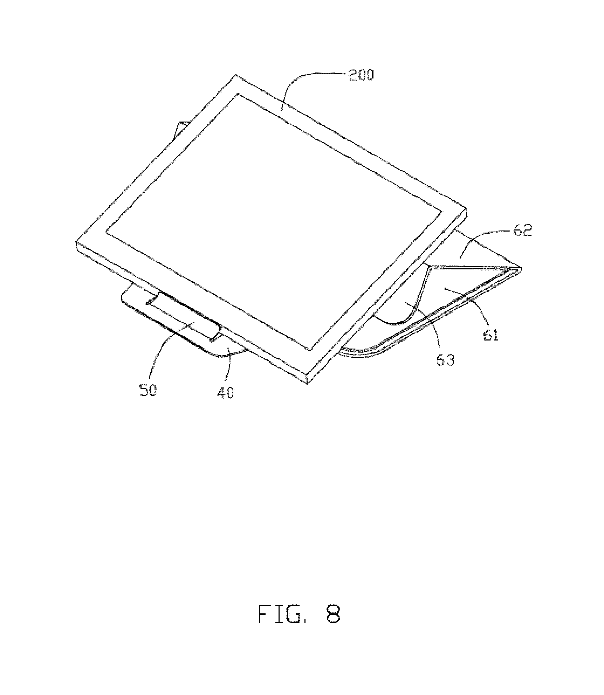

A locking member 45 is configured for retaining the covering portion 40 on the first outer sheet 10 for closing the holder 100. In the exemplary embodiment, the locking member 45 includes a first fastening tape 451 attached on one surface of the covering portion 40, and a second fastening tape 452 attached on the first outer sheet 10. The first fastening tape 451 may be adhered to the second fastening tape 452 for mounting the covering portion 40 to the first outer sheet 10. The covering portion 40 defines a slot 41 on another surface thereof. A tongue portion 50 is formed in the slot 41. One edge of the tongue portion 50 is connected to the covering portion 40. Referring to FIGs. 6 and 8, the tongue portion 50 may be bent away from the covering portion 40 to allow the portable electronic device 200 to be supported by the tongue portion 50.

Referring to FIG.2, a base portion 61, a first supporting portion 62 and a second supporting portion 63 are formed on the second outer sheet 20. The base portion 61, the first supporting portion 62 and the second supporting portion 63 are made of rigid material.

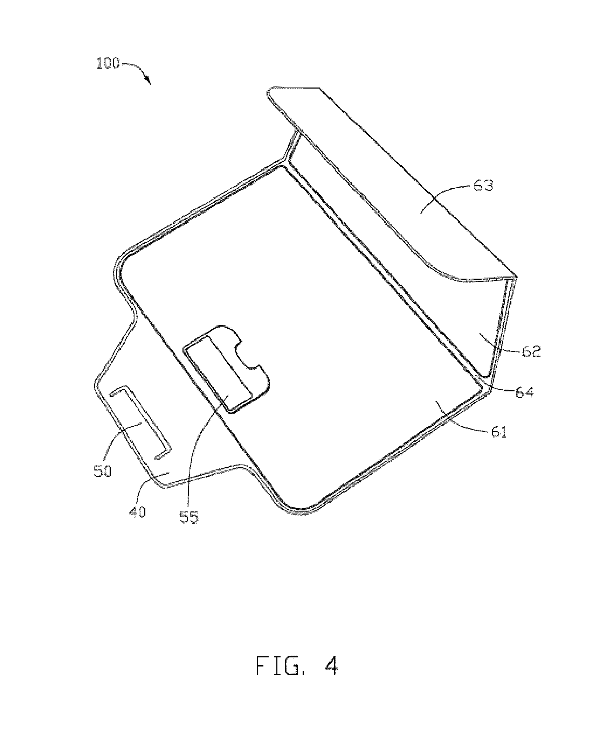

In the exemplary embodiment, the base portion 61 is adjacent to the covering portion 40. The first supporting portion 62 is positioned between the base portion 61 and the second supporting portion 63. A first folding region 64 is positioned between the base portion 61 and the first supporting portion 62, and a second folding region 65 is positioned between the first supporting portion 62 and the second supporting portion 63. The base portion 61, the first supporting portion 62 and the second supporting portion 63 can be folded relative to each other (e.g. Fig 4) along the first folding region 64 and the second folding region 65. However, since the first supporting portion 62 and the second supporting portion 63 are made of rigid material, the first supporting portion 62 and the second supporting portion 63 cannot be folded themselves.

The base portion 61 has a latching piece 55 formed thereon adjacent to the covering portion 40. The latching piece 55 has a bendable portion 551. The bendable portion 551 may be bent away from the base portion 61 to allow the second supporting portion 63 to be supported thereon.

Referring to FIG.3, when the portable electronic device 200 needs to be received in the holder 100, the covering portion 40 is folded over to uncover the entrance 31. The device 200 can then be inserted into the receiving space of the holder 100 via the entrance 31 for storage. After that, the first fastening tape 451 is adhered to the second fastening tape 452 for mounting the covering portion 40 to the first outer sheet 10.

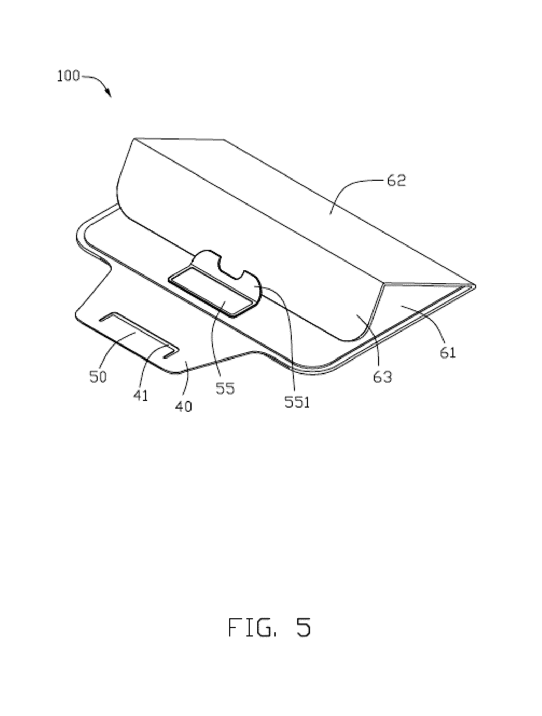

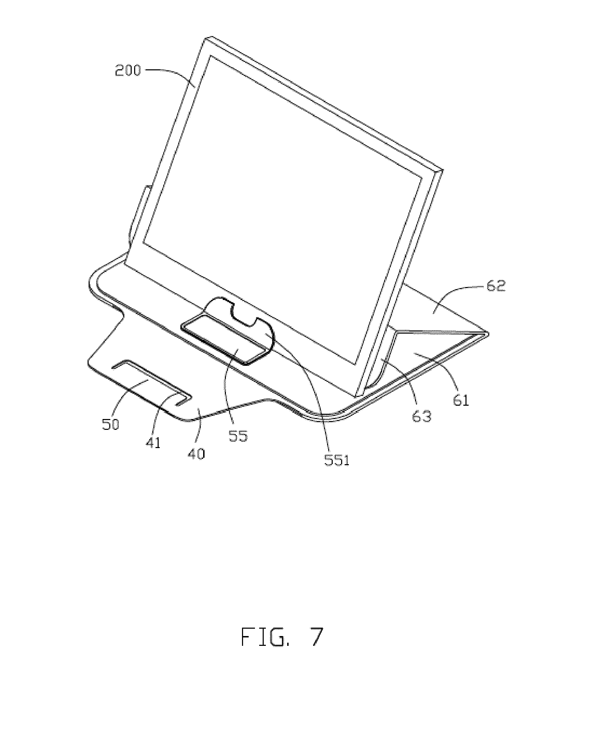

Also referring to FIGs. 4 and 5, to fold the holder 100 to form a support, the first supporting portion 62 and the second supporting portion 63 are folded toward the base portion 61 along the first folding region 64 and the second folding region 65 until the second supporting portion 63 stands on the base portion 63. The bendable portion 551 is folded to allow the second supporting portion 63 to be supported by the bendable portion 551. Thus, the base portion 61, the first supporting portion 62 and the second supporting portion 63 can form a three-dimensional structure that will not collapse. Also referring to FIG. 7, the portable electronic device 200 is set on the holder 100 as a support. One end of the portable electronic device 200 is supported between the foldable piece 551 and the second supporting portion 62. The portable electronic device 200 is supported by the first supporting portion 62 and the second supporting portion 63 at an angle. Thus, users can comfortably view the display of the portable electronic device 200.

Referring to FIGs. 6 and 8, if the viewed angled of the portable electronic device 200 needs to be adjusted, the tongue portion 50 can be bent around the edge along a direction far away from the covering portion 40. The portable electronic device 200 is held on the tongue portion 50. Thus, users can comfortably view the display of the portable electronic device 200 at a different angle.

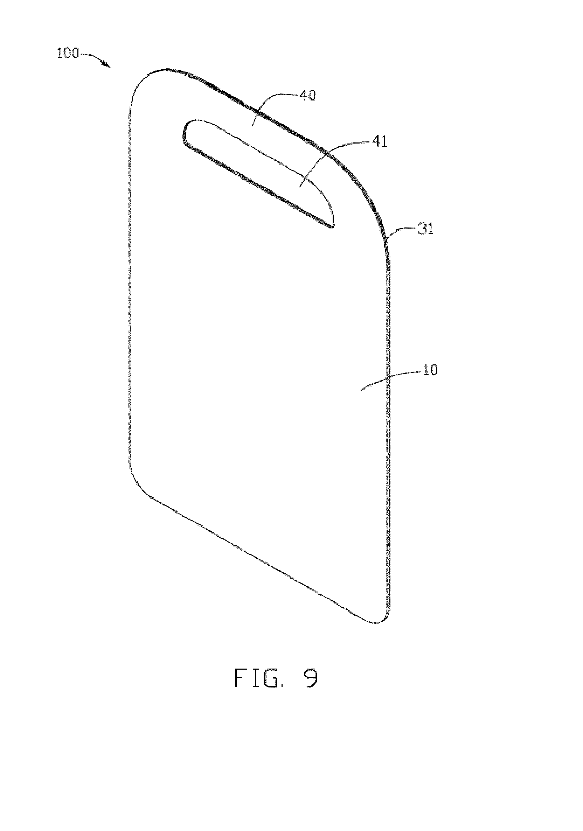

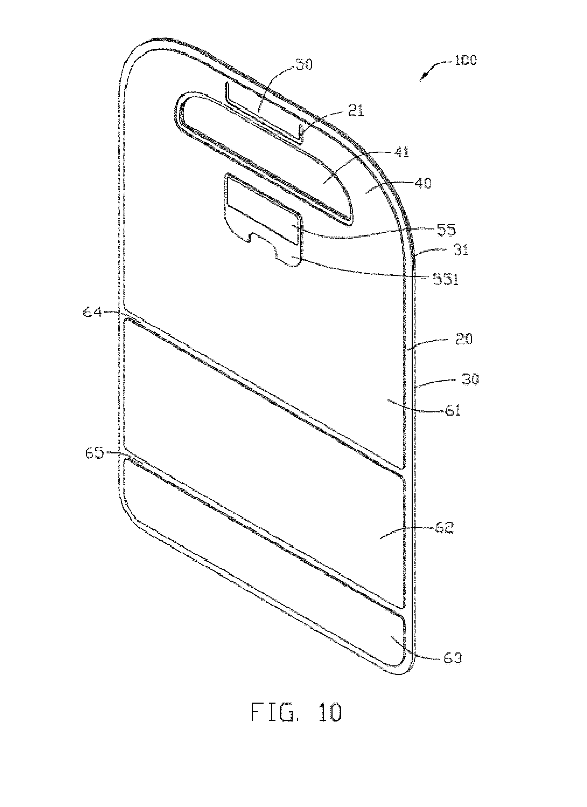

FIGS. 9 and 10 show a second exemplary embodiment of a holder 100. The holder 100 can receive and protect a portable electronic device 200, and can also support and hold the portable electronic device 200.

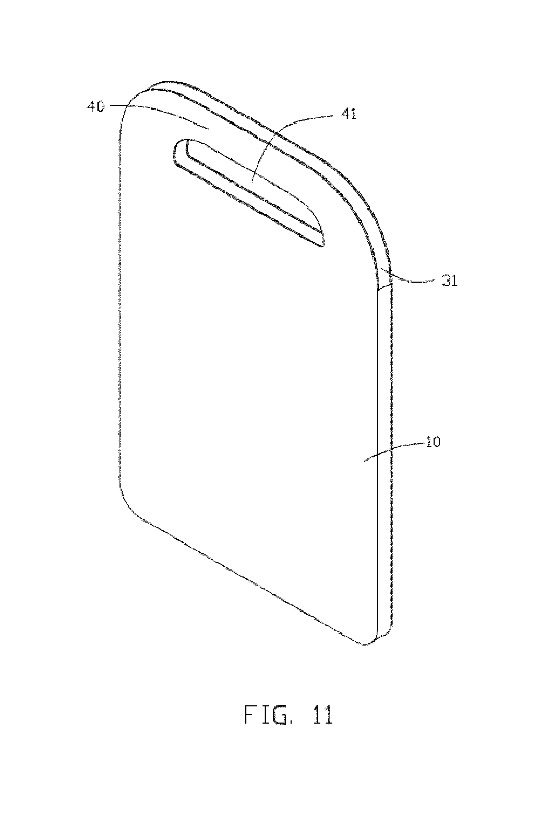

Also referring to FIGs. 10 and 11, the holder 100 includes a first outer sheet 10, a second outer sheet 20, an expandable portion 30, and a handled portion 40. A receiving space (not labeled) is defined between the second outer sheet 20 and the first outer sheet 10 and surrounded by the expandable portion 30 for receiving the portable electronic device 200. The second outer sheet 20 and the first outer sheet 10 are connected to each other along their edges by the expandable portion 30, leaving an entrance 31 that allows the portable electronic device 200 to be inserted into the receiving space.

The handled portion 40 includes two extending sheets, one extending sheet extending from the first outer sheet 10 and the other extending sheet extending from the second outer sheet 20. The handled portion 40 defines a through hole 41 passing through the two extending sheets. The through hole 41 makes the holder 100 convenient to carry. To lock the handled portion 40, two attractive magnet members may be attached to the two extending sheets for preventing the portable electronic device 100 from separating from the entrance 31.

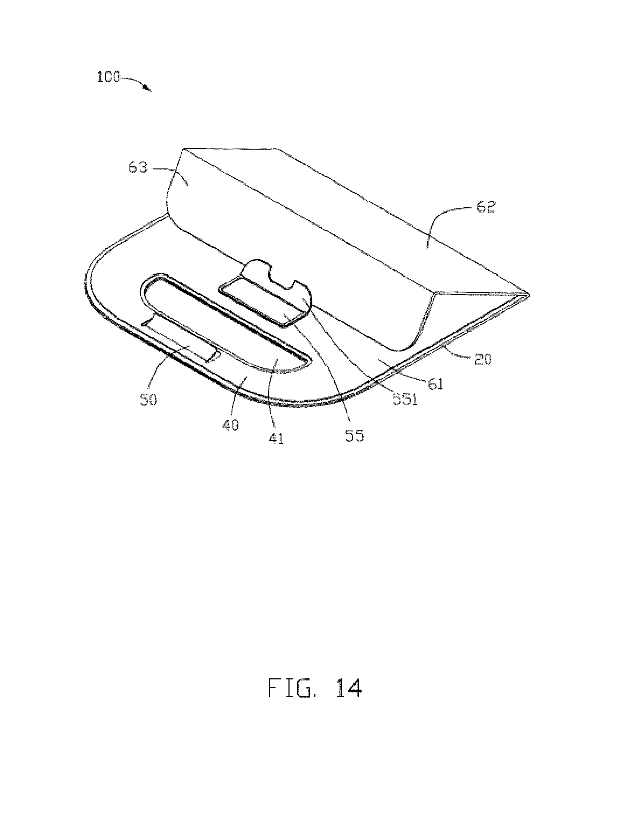

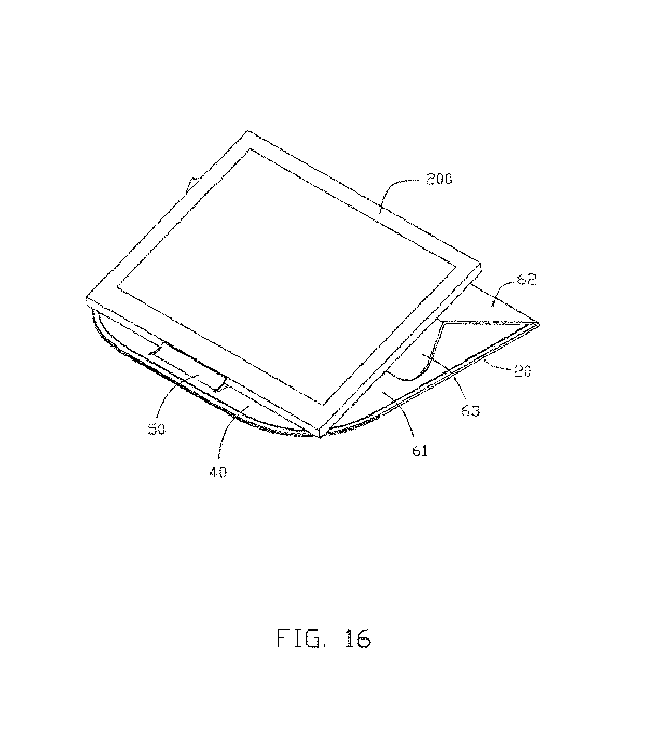

The handled portion 40 defines a slot 21 on one side of the through hole 41. A tongue portion 50 is formed in the slot 21. One edge of the tongue portion 50 is connected to the handled portion 40. Referring to FIGs. 14 and 16, the tongue portion 50 may be bent away from the handled portion 40 to allow the portable electronic device 200 to be supported by the tongue portion 50.

Referring to FIG.11, when the portable electronic device 200 needs to be received in the holder 100, the handled portion 40 is opened to expose the entrance 31. The device 200 can then be inserted into the receiving space of the holder 100 via the entrance 31 for storage.

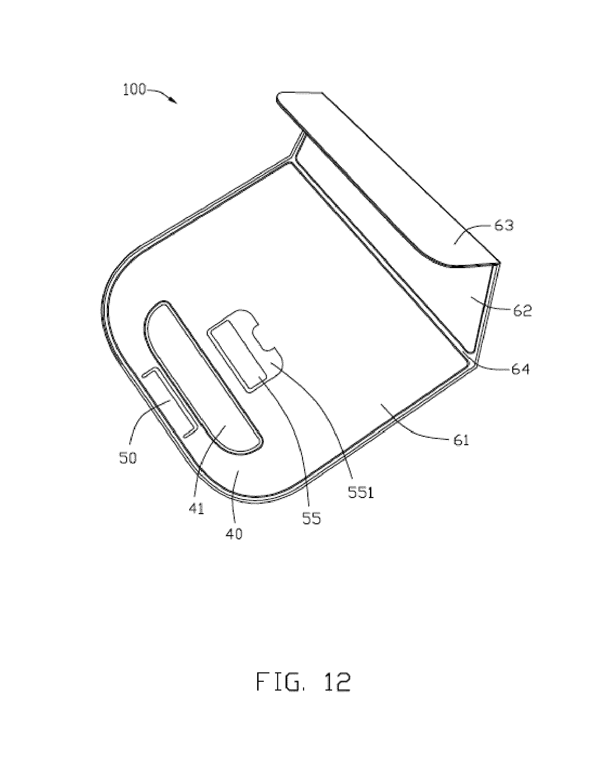

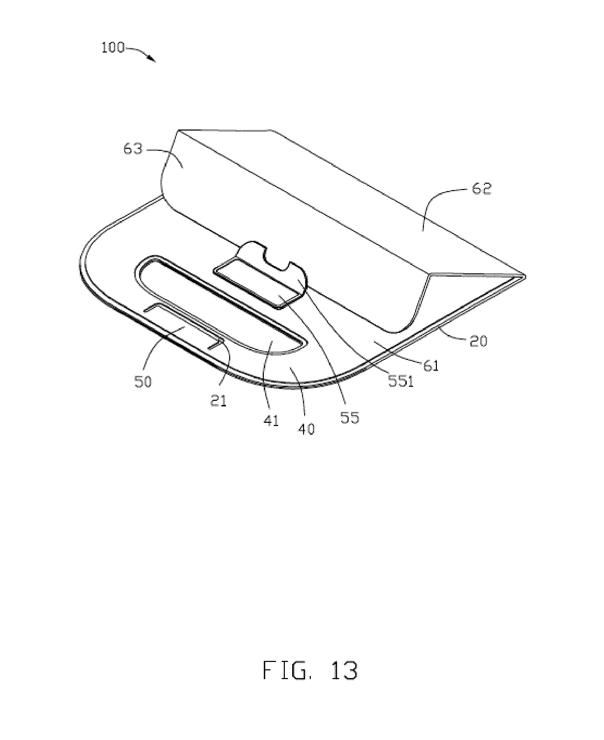

Also referring to FIGs. 12 and 13, to fold the holder 100 to form a support, the first supporting portion 62 and the second supporting portion 63 are folded toward the base portion 61 along the first folding region 64 and the second folding region 65 until the second supporting portion 63 stands on the base portion 63. The bendable portion 551 is folded to allow the second supporting portion 63 to be held on the bendable portion 551. Thus, the base portion 61, the first supporting portion 62 and the second supporting portion 63 can form a three-dimensional structure that will not collapse. Also referring to FIG. 7, the portable electronic device 200 is set on the holder 100 as a support. One end of the portable electronic device 200 is supported between the bendable portion 551 and the second supporting portion 62. The portable electronic device 200 is supported by the first supporting portion 62 and the second supporting portion 63 at an angle. Thus, users can comfortably view the display of the portable electronic device 200.

Referring to FIGs. 14 and 16, if the viewed angled of the portable electronic device 200 needs to be adjusted, the tongue portion 50 can be bent around the edge along a direction far away from the handled portion 40. The portable electronic device 200 is held on the tongue portion 50. Thus, users can comfortably view the display of the portable electronic device 200 at a different angle.

It is to be understood that even though numerous characteristics and advantages of the present embodiments have been set forth in the foregoing description, together with details of the structures and functions of the embodiments, the disclosure is illustrative only, and changes may be made in detail, especially in matters of shape, size, and arrangement of parts within the principles of the disclosure to the full extent indicated by the broad general meaning of the terms in which the appended claims are expressed.

## Claims

1. A holder for holding and supporting a portable electronic device, comprises at least one sheet, **characterized in that**: a base portion, a first supporting portion and a second supporting portion are formed on the at least one sheet, the base portion, the first supporting portion and the second supporting portion are parallel with each other and are folded relative to each other; a latching piece is formed on the base portion; the first supporting portion is folded relative to the base portion, and the second supporting portion is folded relative to the first supporting portion until the second supporting portion is held by the latching piece, the base portion, the first supporting portion and the second supporting portion cooperatively form a three-dimensional structure that can support the portable electronic device at an angle relative to the at least one sheet without collapsing.

2. The foldable holder as claimed in claim 1, **characterized in that**: the at least one sheet further comprises two sheets, a receiving space is formed between the two sheets for receiving the portable electronic device, an entrance is defined between the two sheets and communicate with the receiving space, the entrance allows the portable electronic device to be inserted into the receiving space.

3. The foldable holder as claimed in claim 2, **characterized in that**: the holder comprises a covering portion extending from one of the two sheets configured for covering the entrance.

4. The foldable holder as claimed in claim 3, **characterized in that**: the covering portion defines a slot, and a tongue portion is formed in the slot, one edge of the tongue portion is connected to the covering portion, the tongue portion is bent around the edge along a direction far away from the covering portion to allow the portable electronic device to be supported by the tongue portion.

5. The foldable holder as claimed in claim 2, **characterized in that**: the holder comprises a handled portion extending from the two sheets, the handled portion defines a through hole for being handled.

6. The foldable holder as claimed in claim 5, **characterized in that**: the handled portion defines a slot at one side of the through hole, and a tongue portion is formed in the slot, one edge of the tongue portion is connected to the handled portion, the tongue portion is bent away from the handled portion to allow the portable electronic device to be supported on the tongue portion.

7. The foldable holder as claimed in claims 1, 2, 3, 4, 5 or 6, **characterized in that**: a first folding region is formed between the base portion and the first supporting portion, a second folding region is formed between the first supporting portion and the second supporting portion.

8. The foldable holder as claimed in claims 2, 3, 4, 5 or 6, **characterized in that**: the two sheets are made from one or more materials selected from a group consisting of fiber, cotton, vinyl, thermoplastics.

9. A foldable holder for holding and supporting a portable electronic device, comprises a first outer sheet and a second outer sheet connected to the first outer sheet, a receiving space and an entrance being defined between the first outer sheet and the second outer sheet for receiving the portable electronic device, the entrance communicates with the receiving space, the entrance allows the portable electronic device to be inserted into the receiving space; **characterized in that**: a plurality of foldable portions formed on the second outer sheet, the foldable portions parallel with each other when the holder is in a flat configuration and foldable relative to each other; a latching piece is formed on the second outer sheet, the latching piece has a bendable portion; the foldable portions are folded relative to each other until one of the foldable portions is held by the latching piece, the foldable portions cooperatively form a three-dimensional structure that can support the portable electronic device at an angle relative to the second outer sheet without collapsing.

10. The foldable holder as claimed in claim 9, **characterized in that**: a covering portion extends from the second outer sheet configured for covering the entrance.

11. The foldable holder as claimed in claim 10, **characterized in that**: the covering portion defines a slot, and a tongue portion is formed in the slot, one edge of the tongue portion is connected to the covering portion, the tongue portion is bent around the edge along a direction far away from the covering portion to allow the portable electronic device to be supported by the tongue portion.

12. The foldable holder as claimed in claim 9, **characterized in that**: the holder comprises a handled portion, the handled portion extends from the first outer sheet and the second outer sheet, a through hole is defined in the handled portion for being handled.

13. The foldable holder as claimed in claims 9, 10, 11, or 12, **characterized in that**: the first outer sheet and the second outer sheet are made from one or more materials selected from a group consisting of fiber, cotton, vinyl, thermoplastics.
